# EUROPÄISCHE PATENTSCHRIFT

(11) **EP 1 991 406 B1**
(45) Veröffentlichungstag und Bekanntmachung des Hinweises auf die Patenterteilung: **15.06.2011**
(21) Anmeldenummer: 07723063.9
(22) Anmeldetag: 06.03.2007
(51) Int. Cl.: B29C 45/00, B29C 45/16, B29C 45/14, B29C 45/26, F02D 9/10, F02M 35/10

(54) **SPRITZGUSSVERFAHREN ZUR HERSTELLUNG EINES BAUTEILS MIT WENIGSTENS ZWEI GESONDERT VONEINANDER UND RELATIV ZUEINANDER BEWEGLICH AUSGEBILDETEN FUNKTIONSKOMPONENTEN**
INJECTION-MOULDING PROCESS FOR PRODUCTION OF A COMPONENT WITH AT LEAST TWO FUNCTIONAL COMPONENTS DESIGNED TO BE MOVABLE SEPARATELY FROM ONE ANOTHER AND RELATIVE TO ONE ANOTHER
PROCEDE DE MOULAGE PAR INJECTION POUR LA FABRICATION D'UN ELEMENT AYANT AU MOINS DEUX COMPOSANTS FONCTIONNELS REALISES SEPAREMENT L'UN DE L'AUTRE ET DEPLAÇABLES L'UN PAR RAPPORT A L'AUTRE

(30) Priorität: 07.03.2006 DE 102006010499
(43) Veröffentlichungstag der Anmeldung: 19.11.2008
(73) Patentinhaber: Röchling Automotive AG & Co. KG, 68165 Mannheim (DE)
(72) Erfinder: BARBOLINI, Marco, I-39100 Bolzano (IT); DI PAULI, Ferdinand, I-39100 Bolzano (IT); CHINI, Fabrizio, I-38060 Isera (IT)
(74) Vertreter: Trossin, Hans-Jürgen
(86) Internationale Anmeldenummer: PCT/EP2007/001918
(87) Internationale Veröffentlichungsnummer: WO 2007/101656

(56) Entgegenhaltungen:
- EP-A1- 1 331 075
- DE-A1- 4 339 450
- DE-C- 926 216
- JP-A- 11 294 203
- US-A- 3 941 495
- US-A- 4 237 089
- US-A- 5 421 718
- LEO V., CUVELLIEZ CH.: "The effect of the packing parameters, gate geometry, and mold elasticity on the final dimensions of a molded part" POLYMER ENGG. AND SIENCE, [Online] Bd. 36, Nr. 15, August 1996 (1996-08), Seiten 1961-1971, XP002435766 Gefunden im Internet: URL:http://www3.interscience.wiley.com/cgi -bin/abstract/108064119/ABSTRACT> [gefunden am 2007-05-31]

## Beschreibung

Die vorliegende Erfindung betrifft ein Spritzgussverfahren zur Herstellung eines Bauteils mit wenigstens zwei gesondert voneinander und relativ zueinander beweglich ausgebildeten Funktionskomponenten gemäß dem Oberbegriff von Anspruch 1. Als derartiges Bauteil wird insbesondere aber nicht ausschließlich an eine Schaltklappenanordnung gedacht, wie sie etwa im Ansaugtrakt von Automobilen verwendet wird.

Ein gattungsgemäßes Verfahren ist aus der US-A-5421718 bekannt.

Die als Beispiel für ein Bauteil, dessen Herstellung die vorliegende Anmeldung betrifft, bezeichneten Schaltklappenanordnungen weisen einen gemeinsamen Wellenabschnitt auf, auf welchem Klappen zur gemeinsamen Drehung mit diesem angeordnet sind. Die Klappen bilden eine Funktionskomponente des Bauteils. Die Schaltklappenanordnung umfasst neben den Klappen als weitere Funktionskomponenten eine Mehrzahl von Lagern oder Lagerböcken, welche den Wellenabschnitt zur Drehung um eine in Wellenabschnittslängsrichtung sich erstreckende Wellenachse lagern. Der Wellenabschnitt und die drehfest mit diesem verbundenen Klappen sind also relativ zu den Lagern drehbar. Im eingebauten Zustand der Schaltklappenanordnung ist eine Schaltklappe einem Ansaugkanal einer Brennkraftmaschine zugeordnet, wobei sich jede Klappe üblicherweise zwischen zwei Lagern befindet. Die Lager werden beispielsweise in Seitenwände von Ansaugkanälen montiert.

Das Herstellungsverfahren des bekannten Bauteils umfasst als Verfahrensschritte ein Aufstecken bereits vorgefertigter Funktionskomponenten, in diesem Falle der Lager, auf einen Wellenrohling, Einlegen des-mit Funktionskomponenten bestückten Wellenrohlings in eine Spritzgussform und Anspritzen von weiteren Funktionskomponenten (in diesem Fall der Klappen) an den Wellenrohling der in die Spritzgussform eingelegten Komponentengruppe derart, dass die weiteren Funktionskomponenten und die aufgesteckten Funktionskomponenten relativ zueinander bewegbar sind.

Nachteilig an dem bekannten Herstellungsverfahren ist seine Aufwändigkeit, da Funktionskomponenten gesondert hergestellt, vormontiert und als vormontiertes Zwischenprodukt in die Spritzgussform eingelegt werden müssen.

Aufgabe der vorliegenden Erfindung ist es daher, eine technische Lehre anzugeben, mit welcher ein Bauteil mit wenigstens zwei gesondert voneinander und relativ zueinander beweglich ausgebildeten Funktionskomponenten einfacher als bisher hergestellt werden kann.

Diese Aufgabe wird erfindungsgemäß gelöst durch ein Spritzgussverfahren zur Herstellung eines Bauteils mit wenigstens zwei gesondert voneinander und relativ zueinander beweglich ausgebildeten Funktionskomponenten in einer gemeinsamen Spritzgussform, wie es in Anspruch 1 definiert ist, umfassend die folgenden Schritte:
- Einspritzen von fließfähiger Formmasse in wenigstens eine erste Formkavität zur Bildung einer ersten Funktionskomponente mit einem ersten Einspritzdruck und einem ersten Nachdruck,
- Einspritzen von fließfähiger Formmasse in wenigstens eine zweite Formkavität zur Bildung einer zweiten Funktionskomponente mit einem vom ersten verschiedenen zweiten Einspritzdruck und einem vom ersten verschiedenen zweiten Nachdruck,
wobei ein Einspritzdruck aus erstem Einspritzdruck oder zweitem Einspritzdruck höher als der jeweils andere Einspritzdruck und der dem höheren Einspritzdruck zugeordnete Nachdruck höher als der jeweils andere Nachdruck derart gewählt sind, dass die mit dem höheren Einspritzdruck und mit dem höheren Nachdruck gebildete Funktionskomponente eine negative Schwindung aufweist.

Versuche haben nämlich gezeigt, dass durch Einspritzen mit sehr hohem Druck und weiterhin durch anschließendes Aufbringen eines ebenfalls sehr hohen Nachdrucks eine negative Schwindung an spritzgegossenen Bauteilen erzeugt werden kann, so dass sich ein derart spritzgegossenes Bauteil beim Abkühlen auf Grund der negativen Schwindung ausdehnt und größer wird als die für seine Herstellung bereitgestellte Formkavität.

Spritzgusstechnisch kann die negative Schwindung in der Spritzgussform besonders vorteilhaft durch elastische Formeinlagen aus einem Werkstoff mit bezogen auf die jeweils verwendete Formmasse ausreichender Temperaturfestigkeit ausgeglichen werden. Dabei bildet eine derartige Formeinlage wenigstens eine Begrenzungswand der Formkavität für die Funktionskomponente, bei der eine negative Schwindung erreicht werden soll. Durch die beschriebenen Einlagen kann eine Entformung eines spritzgegossenen Bauteils mit negativer Schwindung besonders einfach sichergestellt werden. Die Formeinlage sollte einen niedrigeren Elastizitätsmodul aufweisen als ein Formgrundkörper, in den sie eingesetzt ist. Der Formgrundkörper kann in an sich bekannter Weise aus Metall, insbesondere aus Werkzeug- und Formenstahl, hergestellt sein. Alternativ kann daran gedacht sein, die gesamte Spritzgussform aus einem für die oben genannten Formeinlagen geeigneten Material herzustellen. Die Temperaturfestigkeit eines Materials zur Bildung einer Begrenzungswand einer Formkavität ist im Sinne der vorliegenden Anmeldung dann ausreichend, wenn das Material bei den üblicherweise beim Einspritzen verwendeten Temperaturen der Formmasse formstabil ist.

Grundsätzlich ist jedoch auch die Verwendung einer Spritzgussform aus Werkzeug- und Formenstahl ohne die oben bezeichneten Formeinlagen denkbar.

Durch die negative Schwindung kann erreicht werden, dass die lichte Weite einer Ausnehmung einer solchen Funktionskomponente nach der Entformung aus der Spritzgussform größer ist als die entsprechende Abmessung des Ausnehmungs-Negativs der Spritzgussform. Die Ausnehmung kann sacklochartig oder durchsetzend ausgebildet sein. Insbesondere bei Funktionskomponenten mit einer durch einen Formkern erzeugten Durchgangsöffnung kann am fertigen Bauteil ein Öffnungsdurchmesser erzielt werden, welcher größer als der zugeordnete Kerndurchmesser des die Durchgangsöffnung erzeugenden Kernabschnitts ist. Auf diese Weise kann dann, wenn die erste oder die zweite Funktionskomponente unter Verwendung eines Formkerns mit derart hohen Einspritzdrücken und Nachdrücken spritzgegossen wird, dass eine negative Schwindung auftritt, und der oben beschriebene Formkern ein mit der jeweils anderen Funktionskomponente fest verbundener Abschnitt ist, in einer einzigen Spritzgussform durch zwei Einspritzvorgänge ein Bauteil mit zwei gesondert voneinander ausgebildeten und relativ zueinander beweglichen Funktionsbauteilen sehr einfach und schnell hergestellt werden. Zwischen dem mit negativer Schwindung hergestellten Funktionsbauteil und dem zugeordneten Formkern besteht im abgekühlten Zustand nämlich ein Spiel, das die Relativbeweglichkeit gewährleistet.

Grundsätzlich kann daran bei einem nicht zur vorliegenden Erfindung gehörenden Beispiel gedacht sein, dass die mit höherem Einspritzdruck und höherem Nachdruck hergestellte Funktionskomponente einen spritzgegossenen Abschnitt der jeweils anderen spritzgegossenen Funktionskomponente in einer Umfangsrichtung zumindest abschnittsweise umgibt. Hierzu ist jedoch die Erzeugung einer negativen Schwindung an der umgebenden Funktionskomponente in der Regel nicht erforderlich, da eine wesentlich einfacher zu erreichende positive Schwindung an der durchsetzenden Funktionskomponente ausgenutzt werden kann, um ein für eine Relativbeweglichkeit der beiden Funktionskomponenten gewünschtes Spiel zwischen diesen zu gewährleisten.

Für die hier besonders interessierenden Bauteile, die eine nicht durch Spritzgießen hergestellte und damit im Wesentlichen keiner Schwindung unterliegende Grundkomponente aufweisen, wobei eine der Funktionskomponenten relativ zu dieser Grundkomponente beweglich sein soll und diese zumindest teilweise umgeben soll, ist erfindungsgemäß vorgesehen, dass diese Grundkomponente vor dem Einspritzen in die Spritzgussform eingelegt wird und dann die beiden Einspritzschritte erfolgen. Dabei wird die mit dem niedrigeren Nachdruck gebildete Funktionskomponente an die Grundkomponente zur gemeinsamen Bewegung angespritzt. Die mit dem höheren Einspritzdruck und dem höheren Nachdruck gebildete Funktionskomponente wird nämlich unter Verwendung eines Abschnitts der Grundkomponente als Formkern derart die Grundkomponente zumindest teilweise umgebend spritzgegossen werden, dass die Grundkomponente relativ zu der mit den höheren Drücken hergestellten Funktionskomponente auf Grund eines zwischen ihnen entstehenden Spiels beweglich ist. Durch diese bevorzugte Weiterbildung des erfindungsgemäßen Spritzgussverfahrens kann insbesondere ein Metallteil als Grundkomponente verwendet werden. Dies ermöglicht beispielsweise die Herstellung von Bauteilen, insbesondere von Schaltklappenbaugruppen, mit torsionssteifer Drehwelle, an weiche Klappen mit niedrigerem Einspritzdruck und niedrigerem Nachdruck zur gemeinsamen Drehbewegung angespritzt werden und welche außerdem mit relativ zu ihr beweglichen Lagern mit höherem Einspritzdruck und höherem Nachdruck umspritzt wird. Ein weiterer Vorteil dieser Ausführungsform ist, dass die beiden Einspritzvorgänge bei Verwendung einer in die Spritzgussform eingelegten Grundkomponente als Formkern gleichzeitig erfolgen können, was die erforderliche Prozesszeit verringert.

Es hat sich gezeigt, dass für die Erzielung einer negativen Schwindung Einspritzdrücke von wenigstens 2.500 bar aufgebracht werden müssen. Als Nachdruck sollten stets wenigstens 2.000 bar gewählt sein.

Versuche haben gezeigt, dass zur Erzielung einer negativen Schwindung amorphe thermoplastische Kunststoffe, wie etwa amorphe Polyamide oder/und Polyetherimid oder/und Polysulfone und dergleichen verwendet werden können.

Das oben beschriebene Verfahren kann besonders vorteilhaft mit einer Spritzgussform ausgeführt werden, welche eine erste Formkavität zur Bildung einer ersten Funktionskomponente und eine zweite Formkavität zur Bildung einer zweiten Funktionskomponente aufweist, wobei die zweite Funktionskomponente gesondert von der ersten ausgebildet und relativ zu dieser beweglich ist, und wobei der ersten Formkavität ein erster Angusskanal und der zweiten Formkavität ein vom ersten gesondert ausgebildeter zweiter Angusskanal zugeordnet ist, und wobei ferner wenigstens eine Begrenzungswand der ersten oder der zweiten Formkavität aus einem elastischen Formmaterial gebildet ist, welches einen Elastizitätsmodul aufweist, der kleiner als der Elastizitätsmodul von herkömmlichem Werkzeug- und Formenstahl ist.

Als herkömmlicher Werkzeug- und Formenstahl im Sinne der vorliegenden Anmeldung werden beispielsweise Stähle mit der DIN-Bezeichnung C 45 W, X 210 Cr 12, X 42 Cr 13, 21 MnCr 5 oder 115 CrV 3 angesehen. Diesen entsprechen die unter Fachleuten bekannten Werkstoffnummern 1.1730, 1.2080, 1.2083, 1.2162 bzw. 1.2210. Als bevorzugtes Material mit einem niedrigeren Elastizitätsmodul als die oben genannten Werkzeug- und Formenstähle sind Kunststoffe oder Buntmetalle mit einer bezogen auf die Temperatur der fließfähigen Formmasse beim Einspritzen ausreichenden Temperaturbeständigkeit verwendbar.

Die Spritzgussform kann einen Formgrundkörper aufweisen, welcher beispielsweise aus Werkzeug- und Formenstahl hergestellt sein kann, und kann weiter wenigstens eine in diesen eingebettete Formeinlage aus dem oben bezeichneten elastischen Formmaterial mit gegenüber herkömmlichem Werkzeug- und Formenstahl niedrigerem Elastizitätsmodul aufweisen, wobei dann die Formeinlage wenigstens eine Begrenzungswand der ersten oder der zweiten Formkavität bildet. Mit einer derart ausgebildeten Spritzgussform können große Teile der benötigten Formkavitäten am Formgrundkörper ausgebildet sein, wobei gleichzeitig die Entformbarkeit von Spritzguss-Funktionskomponenten mit negativer Schwindung durch die aus dem elastischen Formmaterial gebildete Begrenzungswand der zugeordneten Formkavität besonders einfach gewährleistet werden kann. Da ausreichend temperaturbeständige Kunststoffe verhältnismäßig teuer sind, kann überdies durch die Bildung von lokalen Formeinlagen der Kostenaufwand für eine Spritzgussform gering gehalten werden.

Es kann jedoch auch daran gedacht sein, die gesamte Spritzgussform aus dem elastischen Formmaterial auszubilden. Dies ist insbesondere bei einfachen Spritzgussbauteilen denkbar, bei welchen sich die Bearbeitung unterschiedlicher Formwerkstoffe wirtschaftlich nicht lohnt.

Besonders vorteilhaft umfasst die Spritzgussform eine dritte Formkavität, welche zur Aufnahme einer gesondert vorgefertigten Grundkomponente ausgebildet ist. Die Grundkomponente kann vor einem Spritzgussvorgang in die dritte Formkavität eingelegt werden und für wenigstens eine Formkavität aus der ersten und der zweiten Formkavität als Formkern dienen.

Die vorliegende Erfindung wird im Folgenden anhand einer beiliegenden Figur erläutert. Diese zeigt schematisch eine Draufsicht auf eine Formhälfte einer für das zuvor geschilderte erfindungsgemäße Spritzgussverfahren verwendeten Spritzgussform.

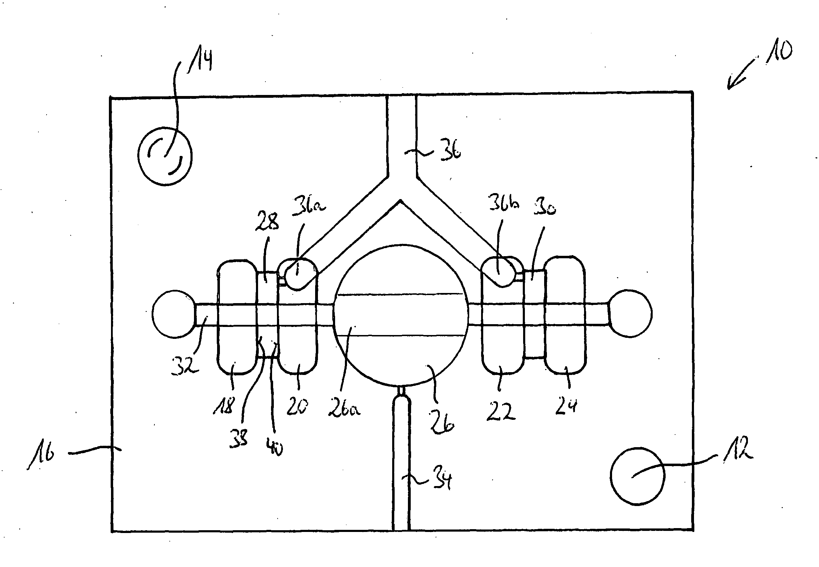

In der Figur ist eine Hälfte einer Spritzgussform allgemein mit 10 bezeichnet. Die Betrachtungsrichtung der Spritzgussformhälfte 10 in der Figur verläuft längs der Öffnungs-Schließ-Bewegungsachse der Form, die orthogonal zur Zeichnungsebene der Figur orientiert ist. Zu erkennen ist eine Zentrierausnehmung 12 sowie ein Zentrierzapfen 14 in der Spritzgussformhälfte 10. In die Zentrierausnehmung 12 greift ein dem Zentrierzapfen 14 entsprechender Zentrierzapfen der jeweils anderen, nicht dargestellten Spritzgussformhälfte beim Schließen der Spritzgussform ein. Gleiches gilt für den Zentrierzapfen 14, welcher in eine der Zentrierausnehmung 12 entsprechende Zentrierausnehmung der jeweils anderen, nicht dargestellten Spritzgussformhälfte beim Schließen der Spritzgussform eingreift.

Die Spritzgussformhälfte 10 umfasst einen Formgrundkörper 16 mit darin eingebetteten Formeinlagen. 18, 20, 22 und 24 aus einem Kunststoff mit einer ausreichend hohen Temperaturbeständigkeit, welcher bei den Temperaturen der fließfähigen Formmasse beim Einspritzen formstabil ist.

Die Spritzgussformhälfte 10 zeigt eine erste Teilkavität 26, zwei zweite Teilkavitäten 28 und 30, eine dritte Teilkavität 32, einen ersten Angusskanal 34 und einen zweiten Angusskanal 36. Die gleichen Teilkavitäten, wie sie für die Sprüzgussformhälfte 10 gezeigt sind, sind spiegelbildlich zur Formteilungsebene (Zeichenebene der Figur) in der jeweils anderen, nicht dargestellten Spritzgussformhälfte vorhanden, wobei bei geschlossener Spritzgussform einander entsprechende Teilkavitäten zur Bildung einer Formkavität vereinigt sind.

Wie in der Figur zu erkennen ist, bilden die Wände 38 und 40 der Formeinlagen 18 bzw. 20 Begrenzungswände der Teilkavität 28. Da die Formeinlagen 18 und 20 verglichen mit dem Formgrundkörper aus herkömmlichem Werkzeug- und Formenstahl ein niedrigeres Elastizitätsmodul aufweisen, kann sich eine in eine unter Beteiligung der zweiten Teilkavität 28 gebildete zweite Formkavität eingespritzte Formmasse selbst bei negativer Schwindung während des Abkühlens besonders leicht ausdehnen. Gleiches gilt für die Formeinlagen 22 und 24 und die von ihnen zum Teil begrenzte zweite Teilkavität 30, welche ähnlich wie die Formeinlagen 18 und 20 sowie die zweite Teilkavität 28 angeordnet sind.

Damit die Formmasse in die zweiten Formkavitäten gelangen kann, ist der Angusskanal 36 an seinen Längsenden 36a und 36b in den Formeinlagen 20 und 22 ausgebildet.

Die dritte Teilkavität 32 ist zur Aufnahme einer zylindrischen Grundkomponente ausgebildet. Diese kann aus Metall ausgebildet sein und in die dritte Teilkavität 32 vor dem Schließen der Spritzgussform eingelegt werden. Diejenigen Abschnitte der Grundkomponente, welche im Bereich der Teilkavitäten 28 und 30 gelegen sind, bilden dann für die unter Beteiligung der zweiten Teilkavitäten 28 und 30 gebildeten zweiten Formkavitäten Formkerne, welche von der in die zweiten Formkavitäten eingespritzten Formmasse umspritzt werden.

Auch die erste Teilkavität 26 und die unter ihrer Beteiligung gebildete erste Teilkavität wird von einer in die dritte Teilkavität 32 eingelegten Grundkomponente durchsetzt. Die erste Teilkavität 26 weist eine Ausnehmung 26a auf, welche ein Umspritzen der eingelegten Grundkomponente derart gestattet, dass in die erste Formkavität eingespritzte Formmasse die Grundkomponente vollständig umgibt.

Die Grundkomponente kann eine zylindrische Metallstange sein, welche an den Stellen der zweiten Teilkavitäten 28 und 30 von Kunststoff zur Bildung von Lagern umspritzt wird, und an welche im Bereich der ersten Teilkavität 26 eine Klappe zur gemeinsamen Drehbewegung mit der Grundkomponente angespritzt wird. Hierfür wird die Formmasse in die zweiten Formkavitäten mit wesentlich höherem Einspritzdruck (über 2.500 bar) und Nachdruck (über 2.000 bar) eingespritzt als die in die erste Formkavität eingespritzte Formmasse. Die in die zweite Formkavitäten eingespritzte Formmasse sowie die verwendeten Einspritzdrücke und Nachdrücke sind derart gewählt, dass die in den zweiten Formkavitäten entstehenden Bauteile beim Abkühlen eine negative Schwindung zeigen. Dadurch kann ein Spiel und somit eine Relativbeweglichkeit zwischen den als Funktionskomponenten in den zweiten Formkavitäten spritzgegossenen Lagern und der Grundkomponente gewährleistet werden. Die zu verwendenden Drücke können abhängig von dem einzuspritzenden Formmassewerkstoff in Versuchen einfach ermittelt werden.

Die mit niedrigerem Einspritzdruck und Nachdruck in die erste Formkavität eingespritzte Formmasse ist dagegen drehfest mit der Grundkomponente verbunden. Hierzu kann die Grundkomponente im Bereich der Teilkavität 26 Vertiefungen, Ausnehmungen oder Durchgänge aufweisen, um eine Formschlussverbindung zwischen der umspritzten Funktionskomponente und der Grundkomponente zu erhalten.

Grundsätzlich kann in die erste und die zweite Formkavität die gleiche Formmasse eingespritzt werden.

Der Angusskanal 34 und die Formkavität 26 kann auch weggelassen sein.

## Patentansprüche

1. Spritzgussverfahren zur Herstellung eines Bauteils mit wenigstens zwei gesondert voneinander und relativ zueinander beweglich ausgebildeten Funktionskomponenten in einer gemeinsamen Spritzgussform (10), umfassend die folgenden Schritte:
- Einspritzen von fließfähiger Formmasse in wenigstens eine erste Formkavität (26) zur Bildung einer ersten Funktionskomponente mit einem einem ersten Einspritzdruck und einem ersten Nachdruck,
- Einspritzen von fließfähiger Formmasse in wenigstens eine zweite Formkavität (28, 30) zur Bildung einer zweiten Funktionskomponente mit einem vom ersten verschiedenen zweiten Einspritzdruck und einem vom ersten verschiedenen zweiten Nachdruck,
wobei ein Einspritzdruck aus erstem Einspritzdruck oder zweitem Einspritzdruck höher als der jeweils andere Einspritzdruck und der dem höheren Einspritzdruck zugeordnete Nachdruck höher als der jeweils andere Nachdruck derart gewählt sind, dass die mit dem höheren Einspritzdruck und mit dem höheren Nachdruck gebildete Funktionskomponente eine negative Schwindung aufweist,
**dadurch gekennzeichnet, dass** es zeitlich vor den Einspritzschritten folgenden weiteren Schritt umfasst:
- Einlegen einer Grundkomponente, insbesondere aus Metall, in die Spritzgussform (10),
wobei die mit dem niedrigeren Einspritzdruck und mit dem niedrigeren Nachdruck gebildete Funktionskomponente an die Grundkomponente zur gemeinsamen Bewegung mit dieser angespritzt wird.

2. Spritzgussverfahren nach Anspruch 1,
**dadurch gekennzeichnet, dass** die mit dem höheren Einspritzdruck und dem höheren Nachdruck gebildete Funktionskomponente einen Abschnitt
der mit dem niedrigeren Einspritzdruck und dem niedrigeren Nachdruck gebildeten Funktionskomponente des herzustellenden Bauteils zumindest teilweise umgibt, vorzugsweise vollständig umschließt.

3. Spritzgussverfahren nach Anspruch 1 oder 2,
**dadurch gekennzeichnet, dass** die mit dem höheren Einspritzdruck und dem höheren Nachdruck gebildete Funktionskomponente einen Abschnitt der mit dem niedrigeren Einspritzdruck und dem niedrigeren Nachdruck gebildeten Grundkomponente des herzustellenden Bauteils zumindest teilweise umgibt, vorzugsweise sogar vollständig umschließt.

4. Spritzgussverfahren nach einem der vorhergehenden Ansprüche,
**dadurch gekennzeichnet, dass** der höhere der beiden Einspritzdrücke gleich oder höher als 2500 bar gewählt ist.

5. Spritzgussverfahren nach einem der vorhergehenden Ansprüche,
**dadurch gekennzeichnet, dass** der höhere der beiden Nachdrücke gleich oder höher als 2000 bar gewählt ist.

6. Spritzgussverfahren nach einem der vorhergehenden Ansprüche,
**dadurch gekennzeichnet, dass** die mit dem höheren Einspritzdruck und dem höheren Nachdruck verarbeitete Formmasse ein amorpher thermoplastischer Kunststoff ist.

7. Spritzgussverfahren nach Anspruch 6,
**dadurch gekennzeichnet, dass** die mit dem höheren Einspritzdruck und dem höheren Nachdruck verarbeitete Formmasse aus den Werkstoffen amorphes Polyamid oder/und amorphes Polyetherimid oder/und amorphes Polysulfon ausgewählt ist.

## Claims

1. An injection-moulding method for producing a component with at least two operational components designed to be movable separately from one another and relative to one another in a common injection mould (10), comprising the following steps:
- injection of flowable moulding material into at least one first mould cavity (26) to form a first operational component at a first injection pressure and at a first holding pressure,
- injection of flowable moulding material into at least one second mould cavity (28,30) to form a second operational component at a second injection pressure different from the first and at a second holding pressure different from the first,
wherein an injection pressure comprising the first injection pressure or second injection pressure is chosen to be higher than the respective other injection pressure and the holding pressure associated with the higher injection pressure is chosen to be higher than the respective other holding pressure in such a way that the operational component formed at the higher injection pressure and at the higher holding pressure has negative shrinkage,
**characterised in that** it comprises the following further step preceding the injection steps in time:
- inserting a base component, in particular of metal, into the injection mould (10),
wherein the operational component formed at the lower injection pressure and at the lower holding pressure is injection-moulded on to the base component for common movement therewith.

2. An injection-moulding method according to Claim 1,
**characterised in that** the operational component formed at the higher injection pressure and at the higher holding pressure at least partly surrounds, preferably completely encloses, a portion of the operational component of the component to be produced, formed at the lower injection pressure and at the lower holding pressure.

3. An injection-moulding method according to Claim 1 or 2, **characterised in that** the operational component formed at the higher injection pressure and at the higher holding pressure at least partly surrounds, preferably even completely encloses, a portion of the base component of the component to be produced, which is formed at the lower injection pressure and at the lower holding pressure.

4. An injection-moulding method according to any one of the preceding Claims, **characterised in that** the higher of the two injection pressures is chosen to be equal to or higher than 2500 bar.

5. An injection-moulding method according to any one of the preceding Claims, **characterised in that** the higher of the two holding pressures is chosen to be equal to or higher than 2000 bar.

6. An injection-moulding method according to any one of the preceding Claims, **characterised in that** the moulding material processed at the higher injection pressure and at the higher holding pressure is an amorphous thermoplastic synthetic material.

7. An injection-moulding method according to Claim 6,
**characterised in that** the moulding material processed at the higher injection pressure and at the higher holding pressure is selected from the materials amorphous polyamide and/or amorphous polyether imide and/or amorphous polysulphone.

## Revendications

1. Procédé de moulage par injection pour la fabrication d'un élément ayant au moins deux composants fonctionnels réalisés séparément l'un de l'autre et déplaçables l'un par rapport à l'autre dans un moule de moulage par injection commun (10), comprenant les étapes suivantes :
- injection de la matière à mouler coulante dans au moins une première cavité de moule (26) pour la formation d'un premier composant fonctionnel avec une première pression d'injection et une première pression de maintien,
- injection de la matière à mouler coulante dans au moins une seconde cavité de moule (28, 30) pour la formation d'un second composant fonctionnel avec une seconde pression d'injection différente de la première et une seconde pression de maintien différente de la première,
une pression d'injection parmi la première pression d'injection ou la seconde pression d'injection étant choisie plus élevée que l'autre pression d'injection respective et la pression de maintien associée à la pression d'injection supérieure étant choisie plus élevée que l'autre pression de maintien respective de telle manière que le composant fonctionnel formé avec la pression d'injection supérieure et avec la pression de maintien supérieure présente un retrait négatif,
**caractérisé en ce qu'**il comporte l'étape supplémentaire suivante temporellement avant les étapes d'injection :
- insertion d'un composant de base, en particulier en métal, dans le moule de moulage par injection (10),
le composant fonctionnel formé avec la pression d'injection inférieure et avec la pression de maintien inférieure étant injecté sur le composant de base pour leur déplacement commun.

2. Procédé de moulage par injection selon la revendication 1,
**caractérisé en ce que** le composant fonctionnel formé avec la pression d'injection supérieure et la pression de maintien supérieure entoure au moins en partie, de préférence entoure complètement, une section du composant fonctionnel formé avec la pression d'injection inférieure et la pression de maintien inférieure de l'élément à fabriquer.

3. Procédé de moulage par injection selon la revendication 1 ou 2,
**caractérisé en ce que** le composant fonctionnel formé avec la pression d'injection supérieure et la pression de maintien supérieure entoure au moins en partie, de préférence entoure même complètement, une section du composant de base formé avec la pression d'injection inférieure et la pression de maintien inférieure de l'élément à fabriquer.

4. Procédé de moulage par injection selon l'une quelconque des revendications précédentes,
**caractérisé en ce que** la pression d'injection supérieure parmi les deux est choisie égale ou supérieure à 2 500 bars.

5. Procédé de moulage par injection selon l'une quelconque des revendications précédentes,
**caractérisé en ce que** la pression de maintien supérieure parmi les deux est choisie égale ou supérieure à 2 000 bars.

6. Procédé de moulage par injection selon l'une quelconque des revendications précédentes, **caractérisé en ce que** la matière à mouler traitée avec la pression d'injection supérieure et la pression de maintien supérieure est une matière thermoplastique amorphe.

7. Procédé de moulage par injection selon la revendication 6,
**caractérisé en ce que** la matière à mouler traitée avec la pression d'injection supérieure et la pression de maintien supérieure est sélectionnée parmi les matériaux suivants, le polyamide amorphe et/ou le polyéthérimide amorphe et/ou le polysulfone amorphe.
